(19) Europäisches Patentamt
European Patent Office
Office européen des brevets

(11) **EP 4 006 615 B1**

(12) **EUROPEAN PATENT SPECIFICATION**

(45) Date of publication and mention
of the grant of the patent:
**10.09.2025 Bulletin 2025/37**

(51) International Patent Classification (IPC):
*G02B 21/36* *(2006.01)*     *G02B 21/00* *(2006.01)*
*G02B 21/22* *(2006.01)*

(21) Application number: **20210808.0**

(22) Date of filing: **30.11.2020**

(52) Cooperative Patent Classification (CPC):
**G02B 21/0012; G02B 21/0076; G02B 21/22;
G02B 21/367**

(54) **IMAGING SYSTEM**

BILDGEBUNGSSYSTEM

SYSTÈME D'IMAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.06.2022 Bulletin 2022/22**

(73) Proprietor: **Leica Instruments (Singapore) Pte.
Ltd.
608924 Singapore (SG)**

(72) Inventor: **Díez-Ochoa, Miguel
9435 Heerbrugg (CH)**

(74) Representative: **2SPL Patentanwälte PartG mbB
Landaubogen 3
81373 München (DE)**

(56) References cited:
**EP-A1- 3 009 098          WO-A1-2012/132333
WO-A1-2014/035128      US-A1- 2015 350 632
US-A1- 2016 311 443      US-A1- 2016 313 548
US-A1- 2018 024 341      US-B2- 10 324 281**

## Description

### Technical field

Examples disclosed herein relate to imaging systems for microscopes, such as multimodal microscopes, stereomicroscopes, surgical microscopes, and methods of operation thereof.

### Background

Modern microscopes are often capable of acquiring images based on different or variable optical mechanisms, such as contrast mechanisms. For example, in some microscopes, multiple images can be acquired to provide greater information than a single image with a single contrast mechanism and/or perspective. For example, a surgical microscope may provide images of anatomical structures by collecting reflected white light from two perspectives, such that a stereoimage can be displayed to a user.

It is possible to utilize multiple imaging modalities to image samples, such as visible and fluorescence imaging, which can provide alternative/additional information. Generally, multiple kinds of optical information may be useful, *e.g.* for highlighting anatomical structures, and can enrich the visual information provided by the optical instrument.

It can be challenging to find ways of processing images, and of presenting images to users, in such a way that available optical information can be intuitively grasped by the user, particularly when multiple imaging modalities are utilized in an imaging system such as a surgical microscope. Optical image(s) may convey spatial information (about the positions of features), information suggestive of materials properties, and other types of information. Optical systems may also have shortcomings in that the output (*e.g.* the image(s) provided to the user) might convey less information than could be extracted from the collected light. Such shortcomings can be due to hardware limitations, modes of display, and/or processing algorithms.

US 2018/0024341 A1 relates to augmented stereoscopic microscopy. In said patent application, augmented images are generated from Near Infrared (NIR) wavelength bands of the light, and combined with the visible light images using beam combiners.

US 2015/0350632 A1 relates to a stereoscopic view synthesis method and apparatus using the same. The stereoscopic image synthesis method generates a disparity map from a first and second image corresponding to a first and second view angle. The disparity map is then shifted based on a zero disparity region in the disparity map, and linearly or non-linearly adjusted. The adjusted disparity map is then used to generate multiple virtual view angles.

US 2016/313548 A1 relates to a microscopic device, and to a method for capturing image of a three-dimensional structure of a specimen. WO 2012/132333 A1 relates to an image processing apparatus and to an image processing method. EP 3 009 098 A1 relates to a microscope system for surgery. US 10 324 281 B2 relates to a surgical microscope having a data unit, and to a method for overlaying images. Finally, WO 2014/035128 A1 relates to an image processing system.

### Summary

It is desirable to have imaging systems, microscopes, and methods of operation which allow the display of images with variable information, and/or are capable of extracting variable information for display, emphasis, and/or context. Furthermore, it is desirable that users be able to contextualize the spatio-optical information that can be obtained/extracted from multiple optical images.

Herein is disclosed an imaging system for a microscope as defined in claim 1.

In an embodiment, a microscope has a processor configured to receive a first image, a second image, and a third image. The processor can determine a disparity map from two of the images, *e.g.* the second image and the third image. A fourth image is determined from the first image and the disparity map. Herein it is disclosed that it is possible to utilize a disparity map obtained from one pair of images to yet another image to provide yet a further image (the fourth image). The fourth image, which, for example, can be obtained by applying the disparity map to the first image, may provide optical information that is hidden or unavailable in any of the first three images. In this way, more optical and/or spatial information may be extracted from the three received images.

According to an embodiment, the first image is offset based on the disparity map to determine the fourth image. Accordingly, it may be possible for the fourth image to be generated based on offset information that may be encoded in the disparity map, such that the fourth image provides opto-spatial information encoded in the first three images that is not directly available in any of the first three images alone. For example, the optical information of the fourth image may be weighted by the first image, while the spatial information is weighted by the second and third images. The fourth image may provide opto-spatial information that is of particular interest to a user, particularly opto-spatial information which may not be immediately apparent from the first three images.

In an embodiment, there is an output that can provide a signal for displaying any single or multiple combination of the first through fourth images. It is desirable to have flexibility in how the images are provided to a user, so that different spatio-optical information can be displayed, highlighted, and/or enhanced.

In an embodiment, the output may allow for a right and left output, for example, which may allow multiple channels of images to be displayed/generated. The ability to have multiple channels of images in different combinations can allow flexibility in highlighting different spatio-optical features for a user. It is furthermore possible that there left and right outputs which simultaneously display images. Simultaneous display of multiple images provide more spatio-optical information to be displayed, highlighted, and/or enhanced.

In an embodiment, the processor is configured for at least one of a plurality of modes, such as any of the first through fourth modes as described as follows. There can be a first mode in which the first image is transmitted to the left output while the fourth image is transmitted to the right output or vice versa. There can be a second mode in which the second image is transmitted to the left output while the third image is transmitted to the right output or vice versa. There may also be a composite mode in which the first and second images are combined and transmitted to either the left output or the right output while the third and fourth images are combined and transmitted to the other of the left output or the right output. Thus, it is possible to have multiple modes which provide for variations of displaying spatio-optical information. This may increase the flexibility of different types of spatio-optical information and/or may allow variable emphasis of particular types of spatio-optical information.

In yet a further embodiment, the left and right outputs can be for generating a stereoscopic image, which may particularly enhance spatial information such as 3-D information. Alternatively/additionally, the first and third images can be for generating a stereoscopic image, particularly when the first and third images are from different perspectives; alternatively/additionally, the second and fourth images can be for generating a stereoscopic image.

In an embodiment, the first and second images can be from a first perspective, and the third image can be from a second perspective. The first and second perspectives can share a field of view. In such an embodiment, features are imaged from different perspectives. This may enrich, for example, spatial aspects of features, particularly those within a shared field of view of the perspectives.

In an embodiment, a first optical path extends to a first detector for collecting light for the first image; a second optical path extends to a second detector for collecting light for the second image; and a third optical path extends to a third detector for collecting light for the third image. In such a configuration, it is possible for the fourth image to convey the optical information from the first image, while conveying the perspective of either the second or third images. This can advantageously provide a spatial perspective for the optical information of the first image which is not directly available from the first image alone; particularly, this can be done without requiring another image to be directly received from the second perspective. This also can simplify the optical set-up and/or make greater use of a limited optical set-up, because, for example, fewer optical components may be required. Optionally the first, second, and third images have a shared field of view 180. This can simplify the spatio-optical information for the user, since the user can more easily compare one image with another since they share a field of view.

In an embodiment, the imaging system is configured such that light passes simultaneously along the first, second, and third optical paths to the first, second, and third detectors. Simultaneous collection of images may prevent artefacts from appearing in the images (particularly the processed images) which can otherwise arise due to movement of the sample and/or microscope, particularly between or even during image acquisitions.

In an embodiment, the first and second optical paths overlap from the shared field of view to an optical element, and thereafter extend to the respective first and second detectors. Having overlapping optical paths can provide for a shared perspective and field of view and may provide optical information that emphasizes optical differences from the same field of view and perspective, particularly when the part of the optical paths that differ are available for suitable optical filters and the like to tailor the system for collecting and/or generating different kinds of optical information.

In an embodiment, the imaging system includes light collection optics for collecting light from a shared field of view and directing the light along the first, second, and third optical paths to the respective first, second, and third detectors. The first image and the second image can each be from a first perspective, and the third image can be from a second perspective. In such a configuration, it is possible for the fourth image to convey the optical information from the first image, while conveying the perspective of either the second or third images.

This can advantageously provide a spatial perspective for the optical information of the first image which is not directly available from the first image alone; particularly, this can be done without requiring another image to be directly received from the second perspective. This also can simplify the optical set-up and/or make greater use of a limited optical set-up, because, for example, fewer optical components may be required.

In an embodiment, the imaging system includes an optical element which separates the first and second optical paths such that at least one of: (i) a primary wavelength band propagates to the first detector along the first optical path and a secondary wavelength band propagates along the second optical path to the second detector; (ii) the primary wavelength band propagates along the first optical path and the primary wavelength band is collected by the first detector; (iii) the secondary wavelength band propagates along the secondary optical path and the secondary wavelength band is collected by the second detector; (iv) the secondary wavelength band does not propagate along the first optical path; and (v) the primary wavelength band does not propagate along the second optical path. Alternatively/additionally a second optical component can remove the secondary wavelength band from the third optical path. The optical element may thereby allow different optical information to be collected from the optical paths, for example, to provide for different optical information to be present into the various images, due to different wavelength ranges being collected along the different paths.

In an embodiment, a surgical stereomicroscope includes the imaging system as described herein. A surgical microscope that includes the imaging system, as disclosed herein, can thereby generate a fourth image which may have optical information that is otherwise hidden or unavailable in any of the first three images. In this way, it may be possible to extract more optical information from the three received images.

Herein is disclosed a method of determining an image, including receiving a first image, receiving a second image, and receiving a third image, determining a disparity map from the second image and the third image; and determining a fourth image from the first image based on the disparity map. The method enables the possible extraction of more optical information from three received images.

Herein is disclosed a computer program with a program code for performing the methods disclosed herein on the imaging system as disclosed herein and/or the surgical microscope as disclosed herein. The computer program enables the extraction of more optical information from received images.

## Short Description of the Figures

Some examples of apparatuses and/or methods will be described in the following by way of example, and with reference to the accompanying figures, in which

Fig. 1 illustrates an imaging system, according to an embodiment described herein;
Fig. 2 illustrates an imaging system, according to an embodiment described herein;
Fig. 3 illustrates an imaging system, according to an embodiment described herein;
Fig. 4 illustrates an imaging system, according to an embodiment described herein;
Fig. 5 illustrates a method of determining an image, according to an embodiment described herein;
Fig. 6 illustrates a system including a microscope and a computer system, according to an embodiment described herein;
Fig. 7 illustrates an imaging system, according to an embodiment described herein; and
Fig. 8 illustrates a method of determining an image, according to an embodiment described herein.

## Detailed Description

Various examples will now be described more fully with reference to the accompanying drawings in which some examples are illustrated. In the figures, which are not to be assumed to be to scale, the thicknesses of lines, layers and/or regions may be exaggerated for clarity.

Herein, infrared may refer optionally to near infrared (NIR), and may in particular refer to NIR fluorescence, for example NIR fluorescence microscopy. NIR fluorescence wavelengths may be from approximately 700 nm to about 1400 nm, for example.

As used herein, the term "and/or" includes any and all combinations of one or more of the associated listed items and may be abbreviated as "/". Herein, the terms "monitor," "display," and "display monitor" may be used interchangeably. Herein "spatio-optical" and "opto-spatial" may be used interchangeably.

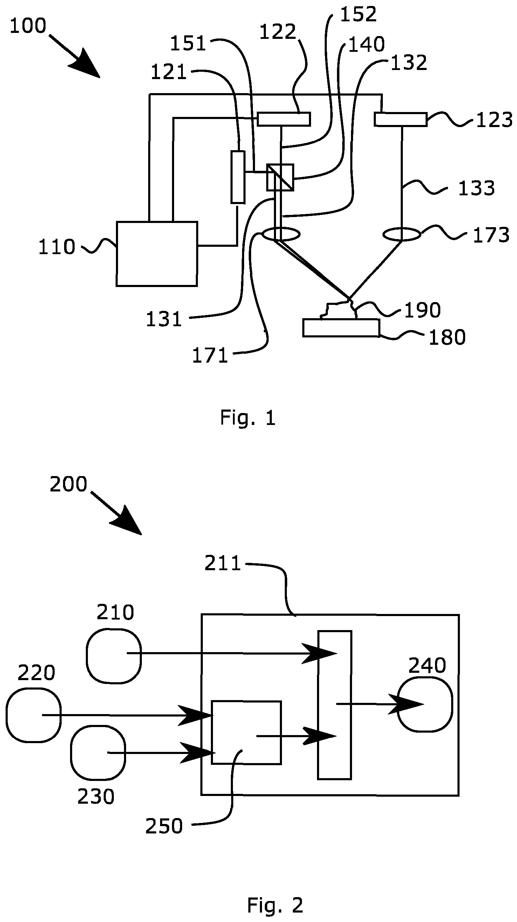

Fig. 1 illustrates an embodiment of an imaging system 100 for a microscope, such as a surgical microscope. Fig. 1 shows an object of interest 190 and a field of view 180. Optical paths 131, 151, 132, 152, 133 from the field of view 180, such as from a point of an object of interest 190, include a first optical path 131, 151 which meets/reaches an optical element 140 such as a beamsplitter, dichroic mirror, or the like. From the optical element 140, the first optical path 131, 151 may continue to a first detector 121. A second optical path 132, 152, *e.g.* from the object of interest 190 may also meet/reach the optical element 140, continuing to a second detector 122.

The optical element 140 may split the collected light, *e.g.* light from a shared field of view 180, into a first optical path 131, 151 and a second optical path 132, 152 leading, respectively, to first and second detectors 121, 122. It is particularly contemplated that the imaging system can be such that light passes simultaneously along various optical paths.

As in Fig. 1, the imaging system 100 may also include a third optical path 133 to a third detector 123. Light collection optics 171, 173 can collect/direct light from the field of view 180 which may be shared by the first, second, and third optical paths 131, 151, 132, 152, 133. Light can pass the respective light collection optics 171, 173 to the respective detectors.

The imaging system 100 may include a processor 110, which may be communicatively coupled to the first, second, and third detectors 121, 122, 123. For example, the optical element 140 is a dichroic mirror and/or the light collected by the first detector 121 is infrared fluorescence and the light collected by the second detector 122 is visible backscatter. Thus, for example, the processor may receive a fluorescence image from the first detector 121, a visible image from the second detector 122, and another visible image from the third detector 123.

Fig. 2 illustrates an embodiment of an imaging system 200 which includes a processor 211 which can receive a plurality of images, such as each of a first, second, and third image 210, 220, 230. The processor 211, having received at least two of the images, for example the second and third images 220, 230, may determine a disparity map 250, which may be an array representative of spatial relationships between corresponding points/pixels of a pair of images (such as images 210, 220). From the first image 210, which is also received by the processor 110, and the disparity map 250 generated by the other two images 220, 230, the processor can determine a fourth image 240. The fourth image 240 may include/highlight spatio-optical information that is not noticeable and/or not directly encoded into the first image.

There are numerous ways envisioned to determine the disparity map 250. By way of example, the disparity may be a measure of the distance (*e.g.* in pixels) between the projection of the same point into two different images (*e.g.* a point of the object of interest 190 projected into each of images 220, 230). The disparity map may provide the pixel distance between the two images (220, 230) of the same point of the object of interest 190. The disparity can be related to the 3D position of the point in space, particularly when the images 220, 230 used to determine the disparity map 250 are taken from different perspectives of a shared field of view 180.

By way of an example, the second and third images 220, 230, as received, are similar, and each includes a common feature at the foreground. In this example, the common feature is shifted by $\delta$ pixels in the x-direction; in such a case, the disparity map 250 may indicate a pixel shift of $\delta$ pixels along x at every pixel which corresponds to the position of the common feature. The disparity map may be an array indicating, for each element of the array, a pixel shift, $\delta$ value, and/or offset.

When a disparity map 250, determined from a pair of images (*e.g.* 220, 230), is used on another image (*e.g.* on received first image 210) to determine yet another image (*e.g.* fourth image 240), the disparity map 250 may be used to shift, *e.g.* by a number of pixels, features of an input image (first image 210) to determine the other image (fourth image 240). The processor 211 may offset pixels of the first image 210 based on the disparity map 250 to determine the fourth image 240. An offset that is applied to the first image 210 to determine the fourth 240 may be done pixel-by-pixel, according to the disparity map 250. It is possible that the offset is greater for features in the foreground than in the background. In an example, spatial information encoded in the disparity map 250, *e.g.* from one pair of images (220, 230), can be applied to another image (*e.g.* the first image 210). This is one example of how spatio-optical information (*e.g.* in the fourth image 240) can be extracted from and/or provided by received images (*e.g.* images 210, 220, 230).

We return to Fig. 1 for another example, Fig. 1 possibly representing a surgical stereomicroscope for visible and fluorescence-infrared imaging. The first detector 121 may collect infrared light (such as fluorescence) and the second and third detectors 122, 123 may collect visible light. A disparity map 250 can be determined from the two visible images (*e.g.* images 220, 230 of Fig. 2), and the disparity map 250 can be used, along with the fluorescence image (*e.g.* image 210), to generate a fourth image 240, which, in this example, can be another fluorescence image like that of the first image 210. The fourth image 240 can also include spatial information from the disparity map 250.

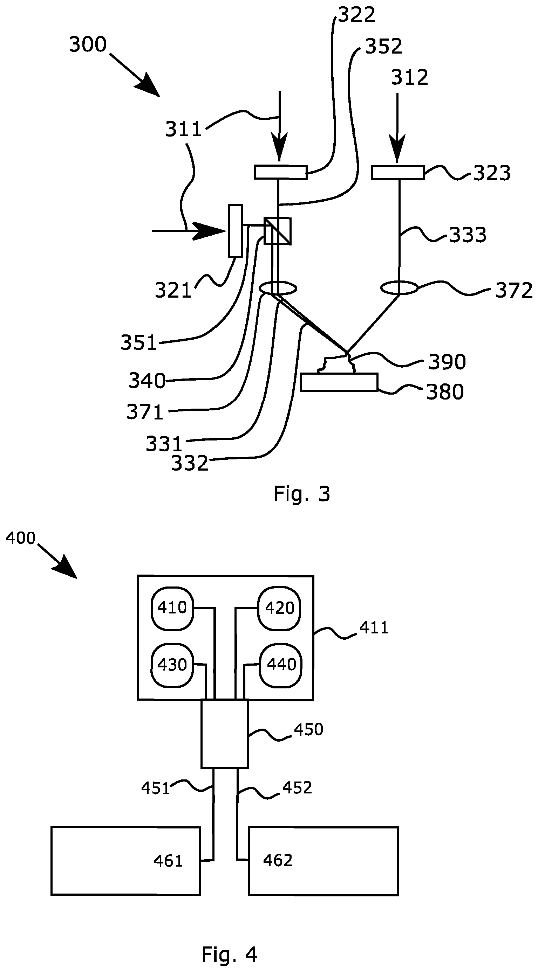

The processor 110, according to an embodiment, may offset the first image 210 based on the disparity map 250 to determine the fourth image 240. For example, the second and third images 220, 230 are from different perspectives (while they may share a field of view 180); and the first and second images 210, 220 are from the same (*e.g.* first) perspective. The fourth image 240, which is generated from the disparity map 250 and the first image 210, can have the same perspective as the third image 230; the first and second images can have a first perspective 311, while the third and fourth images 230, 240 can have a second perspective 312 (see Fig. 3).

For example, the disparity map 250 may be determined based on two visible light images taken from different perspectives. The disparity map may be applied to a NIR fluorescence image so as to determine another NIR image which can have spatial information related to spatial information encoded in the disparity map 250.

The disparity map can be a matrix and/or image which includes information about the distances of features of the images (e.g. objects in the field of view) to the microscope, imaging system, front lens, front lenses, and/or cameras. The information can be encoded as the distance in pixels between the projection of the same point into two detectors (*e.g.* detectors 122, 123). For example, when a point of the object of interest 190 is close to the cameras, the distance between the projections can be high; if another point of the object of interest 190 is far, the distance between projections can be low. The disparity map may reflect offsets, such as pixel-by-pixel, depending on the distance of points of the object to the front lens(es) of the camera(s). Algorithms can be used to obtain the disparity, such as those based on cross-correlation (see equation 1 below).

$$(f \star g)[n] \triangleq \sum_{m=-\infty}^{\infty} \overline{f[m]}g[m+n]$$

Equation 1

Determination of the disparity map may be by taking two images at the same coordinates and performing an operation to determine disparity along a direction, such as an x-direction and/or the direction of the baseline. A cross-correlation may find where in one image the pixels/features are taken in the other image. For example, at each pixel, the best value of the cross-correlation may be determined to be the disparity for that pixel. The determination, operation, algorithm, and/or process can be done for every pixel. There can other approaches to determine disparity, such as methods based on deep learning and/or machine learning.

Herein, the disparity map may be an array which has a dimension corresponding to the dimension of the images. For example, two M×N pixel images (more than two images can be used) may be used to determine a similarly sized disparity map 250, such as an M×N disparity map or a 2M×2N disparity map (or other similarly sized) which may include disparities along 2 directions (x and y). For purposes of illustration, it is convenient to consider embodiments in which the images are aligned such that the disparity is along one direction (*e.g.* x), although such illustrative embodiments are not intended to be limiting. It is also possible that the detectors are aligned/calibrated such that the images used to determine the disparity map 250 received by the processor are aligned, which may simplify the determination of the disparity map. Alternatively/additionally, any of the received images 210, 220, 230 may be processed, particularly for alignment, before the disparity map is determined, *e.g.* pre-processing.

In an embodiment that can be combined with any other embodiment described herein, the processor can determine a depth map. The depth map and disparity map can be related, such as similarly dimensioned. The depth map may include distance information at each pixel, such as the distance to the feature along a direction, such as in a straight line from the front of the microscope which continues from the (average/center) optical path ). The distance information of the depth map, *e.g.* each element thereof, may be relative. For example, the depth elements, *e.g.* $z_{ij}$, of the depth map may be determined from the front of the microscope, each index i,j corresponding to the element position in the matrix representative of the depth map. Depth and disparity may be related by the following:

$$disparity = \frac{Bf}{z}$$

where B is the distance between the optical paths at the front of the imaging system/microscope, e.g. along an imaginary line connecting the light collection optics 171, *172; f* is the focal length which can be the same for each of the light collection optics 171, 172; and *z* is the depth. Disparity and depth are inversely related.

Herein, a depth map may be considered to be derivable from a disparity map, and/or may be considered to be a species of disparity map. Depth can be expressed as depending on disparity and two other parameters (focal length, *f*, and distance, B). Similarly, depth may be considered to be a species of disparity.

Additional/alternative ways/algorithms of determining disparity, the disparity map, depth, and/or depth map,) can be hardware based, software based, and combinations thereof. Herein, a processor 110, 211 may determine the disparity map, the processor being for example a CPU, GPU, field programmable gate array, and/or combination thereof. The processor may be programmed with an algorithm, or a plurality of selectable algorithms, which may each determine a disparity map based on the respective algorithm.

Fig. 3 illustrates, according to an embodiment, an imaging system 300. In Fig. 3, it is highlighted for illustrative purposes that the imaging system 300 has different perspectives, such as a first perspective 311 and second perspective 312. As illustrated in Fig. 3, the first perspective 311 can be shared by the first and second detectors 321, 322; while the third detector 323 can have a second perspective 312. The first perspective 311 may be common to the first and second detectors 321, 322; and the third detector 323 can have the second perspective 312. The perspectives 311, 312 may share a field of view 380. The perspectives 311, 312 may have a common field of view 380.

The first optical path 331 may extend to the first detector 321 for collecting light for the first image 210. The second optical path 352 may extend to the second detector 322 for collecting light for the second image 220. The third optical path 333 may extend to the third detector 323 for collecting light for the third image 230. The detectors 312, 322, 323 and/or their associated images 210, 22, 230 may have a shared/common field of view 380.

The first and second detectors 321, 322 can collect different and/or complementary optical information. As illustrated in Fig. 3, the first perspective 311, has an optical path that is split by the optical element 340 such that two images can be collected from a (shared) first perspective 311. The first and second detectors 321, 322 may collect light of different bands 351, 352, particularly, for example, in the case that the optical element 340, *e.g.* a dichroic, separates light according to wavelength. Additional/alternative light separation mechanisms are possible, including, but not limited to polarization.

The optical element 340 may be augmented and/or substituted with other optical components, selected to determine the type of optical filtering and/or separation for the first and second optical paths and/or first and second detectors 312, 322, respectively. Optical components for allowing different bands to be collected at the detectors 321, 322 can be band-pass filters, long-pass, and short-pass filters, for example, which can be selected/used as appropriate to allow for different bands to be collected at the various detectors 312, 322, 323. Suitable optical components can be used in the first, second, and/or third optical paths for filtering and/or separation of wavelength bands.

The first and second optical paths 331, 332 can overlap from the shared field of view 380 to the optical element 340, and thereafter extend to the respective first and second detectors 321, 322.

In an example, NIR fluorescence is collected by the first detector 321, and visible light is collected by the second detector 322. The visible light may be reflected light from an illumination source, for example; and there may be appropriate long-pass, short-pass, and/or bandpass filters in the optical paths to for efficient optical separation for generating the first and second images 210, 220.

As illustrated in Fig. 3, the optical element 340 may separate the first and second optical paths such that a primary wavelength band 351 propagates to the first detector 321 along the first optical path, and a secondary wavelength band 352 propagates along the second optical path to the second detector 312. Alternatively/additionally, the primary wavelength band 351 propagates along the first optical path and the primary wavelength band 351 is collected by the first detector 321. Alternatively/additionally, the secondary wavelength band 352 propagates along the second optical path and the secondary wavelength band 352 is collected by the second detector 322. Alternatively/additionally, the secondary wavelength band 352 does not propagate along the first optical path. Alternatively/additionally, the primary wavelength band 351 does not propagate along the second optical path.

As an example, a physician may use a surgical microscope to visualize white light and NIR fluorescence, such as from protoporphyrin IX (PpIX) or indocyanine green (ICG). White light can be used for analyzing a topology or structure, such as that of tissue, organs, vessels and the like. The NIR fluorescence may be used to analyze physiological properties such as blood flow, and/or fluorescently labeled tissue such as diseased tissue including malignant cells such as tumor cells. It is desirable to efficiently separate the NIR and visible light to provide greater contrast, particularly in the NIR image.

Fig. 4 illustrates an imaging system 400 according to an embodiment described herein. The imaging system 400 can include an output 450 which can provide a signal for displaying any combination of the first through fourth images 410, 420, 430, 440. The output 450 can be a single channel output for displaying a single image. Alternatively, the output 450 can be configured for multiple channels such as a left output 451 and a right output 452. The left and right output 451, 452 can generate/transmit a stereoscopic image, which can be represented by left and right channels 461, 462 of Fig. 4. The output 450, possibly in the form of left and right output 451, 452 can be transmitted to a 3D viewing device such as a 3D display monitor (or multiple monitors). Alternatively/additionally, the left and right channels 461, 462 can be transmitted to separate displays.

The output 450 can be configured, such as configurable by the processor 411, to transmit any of the first through fourth images 410, 420, 430, 440, including any combination thereof. The output 450 may be such that the left and right outputs 451, 452 can simultaneously transmit/display a plurality of the first through fourth images 410, 420, 430, 440. It is possible to superimpose images in a channel 461, 462 and/or output 450, 451, 452

The processor 411 can have multiple different modes of operation. There can be a first mode in which the first image 410 is transmitted to the left output 451 while the fourth image 440 is transmitted to the right output 452 or vice versa. There can be a second mode in which the second image 420 is transmitted to the left output 451 while the third image 430 is transmitted to the right output 452 or vice versa. There can be a composite mode in which the first and second images 410, 420 are combined and transmitted to either the left output 451 or the right output 452 while the third and fourth images 430, 440 are combined and transmitted to the other of the left output or the right output 451, 452.

Returning to the example of a stereoscopic microscope for collecting visible and NIR, the left output 451 can be a superposition of the visible and NIR from the first perspective 311, while the right output 452 can be the superposition of the visible image 230, 430 from the second perspective 312 and the fourth image 240, 440 which is determined from the first image 210, 410 and the disparity map 250.

In an embodiment, the left and right outputs 451, 452 are for generating a stereoscopic image. For example, the first image 410 and the second image 420 are each from a first perspective 311; and the third image 430 is from a second perspective; the first and second perspectives sharing a field of view 180. The fourth image 440 that is determined/generated from the disparity map 250 can have the second perspective, and/or have spatial information of the second perspective.

In an example, the left output 451 is a combination of a visible and NIR fluorescent image taken from the first perspective 311, and the right output 452 is a combination of a visible and NIR fluorescent image from the second perspective 312. The visible portion of the right output 452 can come from the third image 430, while the NIR portion comes from the first image 410 and the disparity map 250. For example the NIR portion of the right output 452 comes from the fourth image 440 which is determined from the NIR fluorescent image taken from the first perspective 311 and the disparity map 250 determined from the visible images.

It is also possible to have the output 450 transmitted to a 3D viewer such as 3D a monitor. The transmitted signal may provide a stereoscopic view of any combination of the images, particularly those from complementary perspectives, *e.g.* from first and second perspectives 311, 312, including images having perspectives that are determined by image processing.

It is particularly contemplated to have a surgical stereomicroscope which utilizes the imaging system as described herein. For example, it is desirable to have a surgical stereomicroscope that provides a combination of visible and NIR fluorescence spatio-optical information to a user. In an embodiment, two detectors collect visible and NIR fluorescence from a first perspective 311, while another detector collects visible from a second perspective 312. A disparity map is determined from the visible images which is then used to determine another NIR fluorescence image from the NIR fluorescence image. An image (or images) can be transmitted from the output 450 to provide a stereoscopic NIR fluorescence image superimposed on a stereoscopic visible image.

It is further contemplated to have an optical system and/or microscope, particularly a stereomicroscope, which is capable of similarly providing multimodal images based on determining/generating images based on disparity maps and received image(s).

The embodiments herein are described for better understanding and are not to be interpreted in a restrictive way. Similarly, the illustrated figures are given to better understand the features und function of the optical system. The optical system can also be used in other applications, particularly those in which there are multiple imaging modalities operating possibly synchronously. The optical system as described herein can be used in surgery, laboratory studies, and/or photography. The arrangement and orientation of the elements such as optical elements, units or systems can differ for from the positions as shown in the figures.

Illumination of the object of interest can be included in the optical system and/or microscope. According to a desired operational mode (or modes), characteristics of the illuminating light such as |intensity or wavelength range may be adjustable.

The processor 110, 211, 411 may be separate from or integrated with the optical system 100 and/or microscope. The processor 110, 211, 411 may also be programmed to perform other operations of the optical system and/or microscope. The optical system 100 may be a modular device which can be attached to an existing microscope or may be integrated with a microscope.

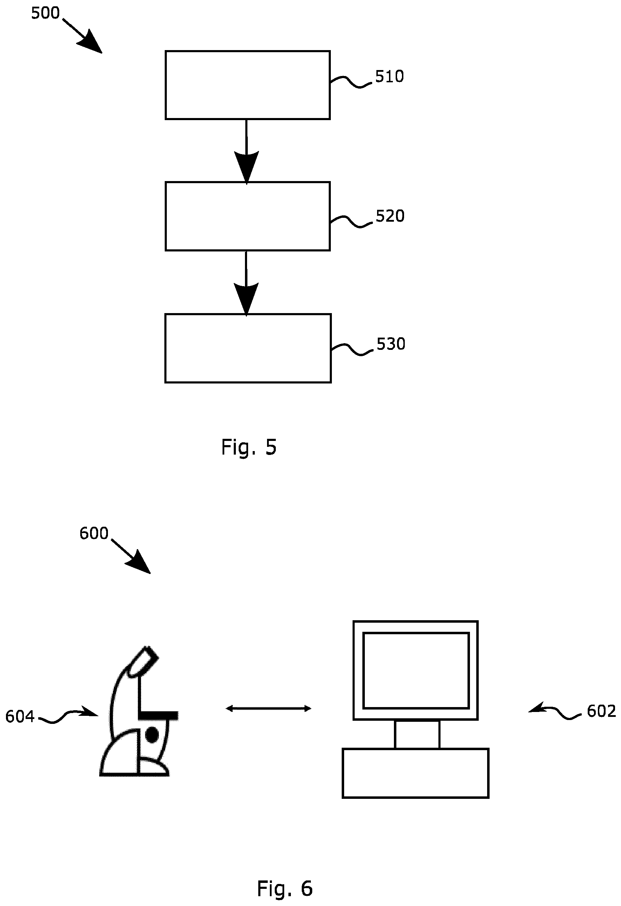

Fig. 5 illustrates a flow chart of a method of determining an image 500, according to an embodiment described herein. In the method, first, second, and third images are received 510. A disparity map is determined from the second and third images 520. A fourth image is determined from the first image based on the disparity map 530. The method can be performed by a computer with a program code, the computer optionally being part of an imaging system and/or surgical microscope.

Fig. 6 illustrates a system 600 including a microscope 602 and a computer system 604, according to an embodiment. The system 600 can include any of the optical systems described herein. The microscope 604 can be a stereomicroscope, such as a surgical stereomicroscope. The computer system 604 may include, for example, the processor as described herein. It is also possible that the computer 604 perform some of the functions of the processor as described herein of the optical systems.

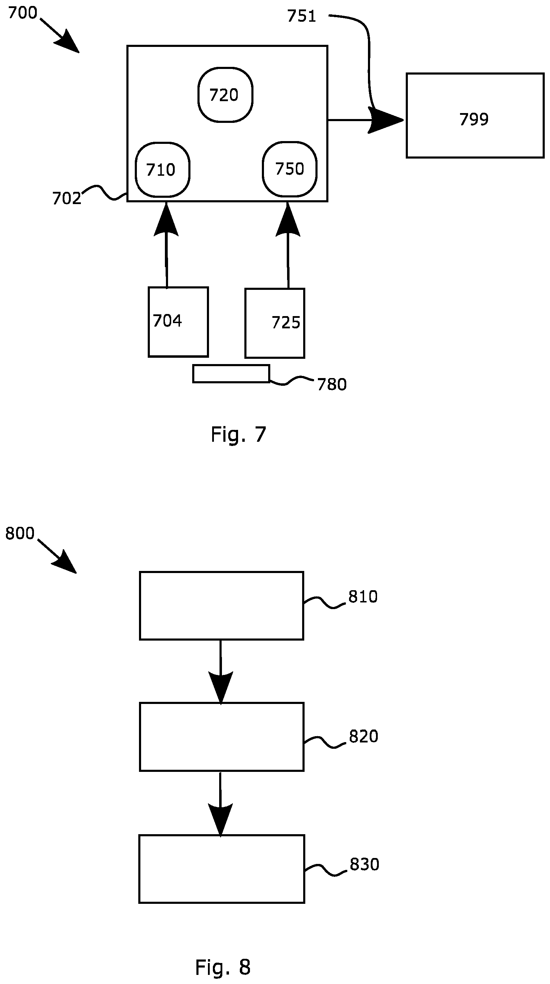

Fig. 7 illustrates a block diagram of an imaging system 700, according to embodiments described herein. The imaging system 700 can include a microscope 704, depth camera 725, and processor 702 (and/or computer system). The processor 702 can receive a first image 710 from the microscope 704, and can receive a depth map 750 from the depth camera 725. The processor 702 can determine a second image 720 from the first image 710 and the depth map 725. The processor 702 may offset the first image 710 based on the depth map 750 to determine the second image 720.

The imaging system 700 can have an output 751 for providing a signal for displaying each of the first and second images 710, 720, such as an output 751 with a left and right output. The output 751 (*e.g.* the left and right outputs) can be for generating a stereoscopic image 799. The depth camera 725 can have a shared field of view 780 with the microscope 704 and/or first image 710. The microscope 704 may be a surgical stereomicroscope.

Fig. 8 illustrates a method of determining an image 800, according to embodiments described herein. The method can include receiving 810 a first image, receiving 820 a depth map from a depth camera, and determining 830 a second image from the first image based on the depth map. Further contemplated is a computer program with a program code for performing the method, such as on the imaging system 700.

The imaging system 700 and/or method 800 can enable a stereoimage to be made from a single image (the first image 710), which can be taken from a single perspective (such as using a single sensor), using the depth map 750 acquired by a depth microscope 725. The features of the depth map 750 may be correlated with those of the first image 710 so as to determine the second image 720, which may particularly highlight the optical information of the first image 710 and the spatial information of the depth camera 725.

Some embodiments relate to a microscope comprising a system (such as imaging system 100, 200, 300, 400, 700) as described in connection with one or more of Figs. 1 to 7. Alternatively, a microscope may be part of or connected to a system (such as imaging system 100, 200, 300, 400) as described in connection with one or more of the Figs. 1 to 6. Figs. 1-6 show a schematic illustration of a system (such as imaging system 100, 200, 300, 400) configured to perform a method described herein. The system can comprise a microscope and a computer system, such as that illustrated in Fig.6. The microscope is configured to take images and can be connected to the computer system. The computer system can be configured to execute at least a part of a method described herein. The computer system may be configured to execute a machine learning algorithm. The computer system and microscope may be separate entities and can also be integrated together in one common housing. The computer system may be part of a central processing system of the microscope and/or the computer system may be part of a subcomponent of the microscope, such as a sensor, an actor, a camera or an illumination unit, *etc.* of the microscope.

The computer system may be a local computer device (e.g. personal computer, laptop, tablet computer or mobile phone) with one or more processors (such as processor 110, 211, 411) and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type.

As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer, or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

**List of reference signs**

| 100, 200, 300, 400, 700 | imaging system |
| 110, 211, 411 | processor |
| 121, 321 | first detector (e.g. for collecting NIR) |
| 122, 322 | second detector (e.g. for visible) |
| 123, 323 | third detector (e.g. for visible) |

| 131, 151, 331 | first optical path (e.g. to detector for NIR) |
| 132, 152, 332 | second optical path |
| 133, 333 | third optical path |
| 140, 340 | optical element (e.g. beam splitter / dichroic) |
| 151, 351 | primary band (e.g. to first detector (NIR)) |
| 152, 352 | secondary band (e.g. vis) |
| 180, 380 | shared field of view |
| 190, 390 | object of interest |

| 171, 372 | light collection optics (e.g. for first perspective) |
| 172, 372 | light collection optics (e.g. for second) |

| 210, 410, 710 | first image |
| 220, 420, 720 | second image |
| 230, 430 | third image |
| 250 | disparity map (e.g. from images 2 and 3) |

| 311 | first perspective |
| 312 | second perspective |
| 351 | primary wavelength band |
| 352 | secondary wavelength band |

| 450, 751 | output |
| 451 | left output |
| 452 | right output |
| 461 | left channel |
| 462 | right channel |
| 500, 800 | method of determining an image |
| 510 | first, second, and third images are received. |
| 520 | determination of the disparity map |
| 530 | determination of the fourth image |

| 600 | System |
|---|---|
| 604, 704 | Microscope |
| 602 | Computer system |
| 702 | Processor |
| 725 | Depth camera |
| 750 | Depth map |
| 799 | Stereoscopic image |
| | |
| 810 | Receiving a first image |
| 820 | Receiving a depth map |
| 830 | Determining a second image |

**Claims**

1. An imaging system (100, 200, 300, 400) for a microscope, comprising:
   a processor (110, 211, 411) configured to:

   receive a first image (210, 410),
   receive a second image (220, 420),
   receive a third image (230, 430),
   determine a disparity map (250) from the second image (220, 420) and
   the third image (230, 430), and
   determine a fourth image (240, 440) from the first image (210, 410) and
   the disparity map (250).

2. The imaging system (100, 200, 300, 400) of claim 1, wherein:
   the processor (110, 211, 411) is configured to offset the first image (210, 410) based on the disparity map (250) to
   determine the fourth image (240, 440).

3. The imaging system (100, 200, 300, 400) of any preceding claim, further comprising
   an output (450) for providing a signal for displaying each of the first through fourth images (410, 420, 430, 440).

4. The imaging system (100, 200, 300, 400) of any preceding claim, wherein

   the output (450) is configured for a left output (451) and a right output (452); wherein
   each of the left and right outputs (451, 452) are configured to transmit any of the first through fourth images, such
   that the output (450) transmits signals, via the left and right outputs (451, 452), for simultaneous display of a
   plurality of the first through fourth images.

5. The imaging system (100, 200, 300, 400) of claim 4, wherein
   the processor (110, 211, 411) is configured for at least one of a plurality of modes comprising:

   a first mode in which the first image (210, 410) is transmitted to the left output (451) while the fourth image is
   transmitted to the right output (452) or *vice versa*;
   a second mode in which the second image (220, 420) is transmitted to the left output (451) while the third image
   (230, 430) is transmitted to the right output (452) or *vice versa*; and
   a composite mode in which the first and second images are combined and transmitted to either the left output
   (451) or the right output (452) while the third and fourth images are combined and transmitted to the other of the left
   output (451) or the right output (452).

6. The imaging system (100, 200, 300, 400) of any of claims 4-5, wherein
   the left and right outputs (451, 452) are for generating a stereoscopic image.

7. The imaging system (100, 200, 300, 400) of any preceding claim, wherein
   the first image (210, 410) and the second image (220, 420) are each from a first perspective (311); and the third image
   (230, 430) is from a second perspective (312).

8. The imaging system of any preceding claim, further comprising

a first optical path (131, 151) extending to a first detector (121) for collecting light for the first image (210, 410);

a second optical path (132, 152) extending to a second detector (122) for collecting light for the second image (220, 420); and

a third optical path (133) extending to a third detector (123) for collecting light for the third image (230, 430); wherein optionally

the first, second, and third images have a shared field of view (180).

9. The imaging system (100, 200, 300, 400) of claim 8, wherein the

first, second, and third optical paths are configured to simultaneously pass light to the first, second, and third detectors (121, 122, 123).

10. The imaging system (100, 200, 300, 400) of any of claims 8-9, wherein

the first and second optical paths (131, 151, 132, 153) overlap from the shared field of view (180) to an optical element (140), and thereafter extend to the respective first and second detectors (121, 122).

11. The imaging system (100, 200, 300, 400) of any of claims 8-10, further comprising:

light collection optics (171, 172) for collecting light from the shared field of view (180) and directing the light along the first, second, and third optical paths (131, 151, 132, 152, 133) to the respective first, second, and third detectors (121, 122, 123) such that

the first image (210, 410) and the second image (220, 420) are each from the first perspective (311), and the third image (220, 420) is from the second perspective (312).

12. The imaging system (100, 200, 300, 400) of any of claims 10-11,

wherein the optical element (140) is configured to separate the first and second optical paths (131, 151; 132, 152) such that at least one of:

a primary wavelength band (151) propagates to the first detector (121) along the first optical path (131, 151) and a secondary wavelength band (152) propagates along the second optical path (132, 152) to the second detector (122);

the primary wavelength band (151) propagates along the first optical path (131, 151) and the primary wavelength band (151) is collected by the first detector (121);

the secondary wavelength band (152) propagates along the second optical path (132, 152) and the secondary wavelength band (152) is collected by the second detector (122);

the secondary wavelength band (152) does not propagate along the first optical path (131, 151); and

the primary wavelength band (151) does not propagate along the second optical path (132, 152).

13. A surgical stereomicroscope (604) comprising the imaging system (100, 200, 300, 400) of any of claims 1-12.

14. A method of determining an image (500), comprising

receiving (510) a first image (210, 410),
receiving (510) a second image (220, 420),
receiving (510) a third image (230, 430),
determining (520) a disparity map (250) from the second image (220, 420) and the third image (230, 430), and
determining (530) a fourth image (240, 440) from the first image (210, 410) based on the disparity map (250).

15. A computer program with a program code for performing the method according to claim 14 on the imaging system (100, 200, 300, 400) of any of claims 1-12 or the surgical microscope (604) of claim 13.

## Patentansprüche

1. Bildgebungssystem (100, 200, 300, 400) für ein Mikroskop, umfassend:
einen Prozessor (110, 211, 411), konfiguriert zum:

Empfangen eines ersten Bildes (210, 410),
Empfangen eines zweiten Bildes (220, 420),
Empfangen eines dritten Bildes (230, 430),

Bestimmen einer Disparitätskarte (250) aus dem zweiten Bild (220, 420) und
dem dritten Bild (230, 430), und
Bestimmen eines vierten Bildes (240, 440) aus dem ersten Bild (210, 410) und der Disparitätskarte (250).

2. Bildgebungssystem (100, 200, 300, 400) nach Anspruch 1, wobei:
der Prozessor (110, 211, 411) zum Versetzen des ersten Bildes (210, 410) auf der Grundlage der Disparitätskarte (250) konfiguriert ist, um das vierte Bild (240, 440) zu bestimmen.

3. Bildgebungssystem (100, 200, 300, 400) nach einem vorstehenden Anspruch, weiter umfassend
eine Ausgabe (450) zum Bereitstellen eines Signals zum Anzeigen von jedem des ersten bis vierten Bildes (410, 420, 430, 440).

4. Bildgebungssystem (100, 200, 300, 400) nach einem vorstehenden Anspruch, wobei

die Ausgabe (450) für eine linke Ausgabe (451) und eine rechte Ausgabe (452) konfiguriert ist; wobei
jede der linken und der rechten Ausgabe (451, 452) zum Übertragen von einem des ersten bis vierten Bildes konfiguriert ist, sodass die Ausgabe (450), über die linke und die rechte Ausgabe (451, 452), Signale zur gleichzeitigen Anzeige einer Mehrzahl des ersten bis vierten Bildes überträgt.

5. Bildgebungssystem (100, 200, 300, 400) nach Anspruch 4, wobei der Prozessor (110, 211, 411) für mindestens einen von einer Mehrzahl von Modi konfiguriert ist, umfassend:

einen ersten Modus, in dem das erste Bild (210, 410) an die linke Ausgabe (451) übertragen wird, während das vierte Bild an die rechte Ausgabe (452) übertragen wird, oder *umgekehrt,*
einen zweiten Modus, in dem das zweite Bild (220, 420) an die linke Ausgabe (451) übertragen wird, während das dritte Bild (230, 430) an die rechte Ausgabe (452) übertragen wird, oder *umgekehrt,* und
einen Kombinationsmodus, in dem das erste und das zweite Bild kombiniert werden und an entweder die linke Ausgabe (451) oder die rechte Ausgabe (452) übertragen werden, während das dritte und das vierte Bild kombiniert werden und an die andere von der linken Ausgabe (451) oder der rechten Ausgabe (452) übertragen werden.

6. Bildgebungssystem (100, 200, 300, 400) nach einem der Ansprüche 4-5, wobei die linke und die rechte Ausgabe (451, 452) zum Erzeugen eines stereoskopischen Bildes vorgesehen sind.

7. Bildgebungssystem (100, 200, 300, 400) nach einem vorstehenden Anspruch, wobei
das erste Bild (210, 410) und das zweite Bild (220, 420) jeweils aus einer ersten Perspektive (311) stammen; und das dritte Bild (230, 430) aus einer zweiten Perspektive (312) stammt.

8. Bildgebungssystem nach einem vorstehenden Anspruch, weiter umfassend

einen ersten optischen Pfad (131, 151), der sich zu einem ersten Detektor (121) erstreckt, um Licht für das erste Bild (210, 410) zu sammeln;
einen zweiten optischen Pfad (132, 152), der sich zu einem zweiten Detektor (122) erstreckt, um Licht für das zweite Bild (220, 420) zu sammeln; und
einen dritten optischen Pfad (133), der sich zu einem dritten Detektor (123) erstreckt, um Licht für das dritte Bild (230, 430) zu sammeln; wobei optional das erste, das zweite und das dritte Bild ein gemeinsames Sichtfeld (180) haben.

9. Bildgebungssystem (100, 200, 300, 400) nach Anspruch 8, wobei der erste, der zweite und der dritte optische Pfad zum gleichzeitigen Hindurchlassen von Licht an den ersten, den zweiten und den dritten Detektor (121, 122, 123) konfiguriert sind.

10. Bildgebungssystem (100, 200, 300, 400) nach einem der Ansprüche 8-9, wobei sich der erste und der zweite optische Pfad (131, 151, 132, 153) von dem gemeinsamen Sichtfeld (180) zu einem optischen Element (140) überlappen und sich danach zu dem jeweiligen ersten und zweiten Detektor (121, 122) erstrecken.

11. Bildgebungssystem (100, 200, 300, 400) nach einem der Ansprüche 8-10, weiter umfassend:
Lichtsammeloptiken (171, 172) zum Sammeln von Licht aus dem gemeinsamen Sichtfeld (180) und Richten des Lichts entlang des ersten, des zweiten und des dritten optischen Pfads (131, 151, 132, 152, 133) auf den jeweiligen ersten, zweiten und dritten Detektor (121, 122, 123), sodass

das erste Bild (210, 410) und das zweite Bild (220, 420) jeweils aus der ersten Perspektive (311) stammen, und das dritte Bild (220, 420) aus der zweiten Perspektive (312) stammt.

12. Bildgebungssystem (100, 200, 300, 400) nach einem der Ansprüche 10-11,
wobei das optische Element (140) zum Trennen des ersten und des zweiten optischen Pfads (131, 151; 132, 152) konfiguriert ist, sodass mindestens eines geschieht von:

ein primäres Wellenlängenband (151) setzt sich zu dem ersten Detektor (121) entlang des ersten optischen Pfads (131, 151) fort und ein sekundäres Wellenlängenband (152) setzt sich entlang des zweiten optischen Pfads (132, 152) zu dem zweiten Detektor (122) fort;
das primäre Wellenlängenband (151) setzt sich entlang des ersten optischen Pfads (131, 151) fort und das primäre Wellenlängenband (151) wird durch den ersten Detektor (121) gesammelt;
das sekundäre Wellenlängenband (152) setzt sich entlang des zweiten optischen Pfads (132, 152) fort und das sekundäre Wellenlängenband (152) wird durch den zweiten Detektor (122) gesammelt;
das sekundäre Wellenlängenband (152) setzt sich nicht entlang des ersten optischen Pfads (131, 151) fort; und das primäre Wellenlängenband (151) setzt sich nicht entlang des zweiten optischen Pfads (132, 152) fort.

13. Chirurgisches Stereomikroskop (604), umfassend das Bildgebungssystem (100, 200, 300, 400) nach einem der Ansprüche 1-12.

14. Verfahren zum Bestimmen eines Bildes (500), umfassend:

Empfangen (510) eines ersten Bildes (210, 410),
Empfangen (510) eines zweiten Bildes (220, 420),
Empfangen (510) eines dritten Bildes (230, 430),
Bestimmen (520) einer Disparitätskarte (250) aus dem zweiten Bild (220, 420) und
dem dritten Bild (230, 430), und
Bestimmen (530) eines vierten Bildes (240, 440) aus dem ersten Bild (210, 410) auf der Grundlage der Disparitätskarte (250).

15. Computerprogramm mit einem Programmcode zum Durchführen des Verfahrens nach Anspruch 14 an dem Bildgebungssystem (100, 200, 300, 400) nach einem der Ansprüche 1-12 oder dem chirurgischen Mikroskop (604) nach Anspruch 13.

**Revendications**

1. Système (100, 200, 300, 400) d'imagerie pour microscope, comprenant :
un processeur (110, 211, 411) configuré pour :

recevoir une première image (210, 410),
recevoir une deuxième image (220, 420),
recevoir une troisième image (230, 430),
déterminer une carte (250) de disparité à partir de la deuxième image (220, 420) et de la troisième image (230, 430), et
déterminer une quatrième image (240, 440) à partir de la première image (210, 410) et de la carte (250) de disparité.

2. Système (100, 200, 300, 400) d'imagerie selon la revendication 1, dans lequel :
le processeur (110, 211, 411) est configuré pour décaler la première image (210, 410) sur la base de la carte (250) de disparité pour déterminer la quatrième image (240, 440).

3. Système (100, 200, 300, 400) d'imagerie selon une quelconque revendication précédente, comprenant en outre une sortie (450) pour fournir un signal d'affichage de chacune des première à quatrième images (410, 420, 430, 440).

4. Système (100, 200, 300, 400) d'imagerie selon une quelconque revendication précédente, dans lequel

la sortie (450) est configurée pour une sortie (451) gauche et une sortie (452) droite ; dans lequel chacune des sorties (451, 452) gauche et droite est configurée pour transmettre l'une quelconque des première à quatrième images, de sorte que la sortie (450) transmette des signaux, via les sorties (451, 452) gauche et droite, pour l'affichage simultané d'une pluralité des première à quatrième images.

5. Système (100, 200, 300, 400) d'imagerie selon la revendication 4, dans lequel le processeur (110, 211, 411) est configuré pour au moins un parmi une pluralité de modes comprenant :

un premier mode dans lequel la première image (210, 410) est transmise à la sortie (451) gauche tandis que la quatrième image est transmise à la sortie (452) droite ou *vice versa,*
un deuxième mode dans lequel la deuxième image (220, 420) est transmise à la sortie (451) gauche tandis que la troisième image (230, 430) est transmise à la sortie (452) droite ou *vice versa,* et
un mode composite dans lequel les première et deuxième images sont combinées et transmises à l'une de la sortie (451) gauche et la sortie (452) droite tandis que les troisième et quatrième images sont combinées et transmises à l'autre de la sortie (451) gauche et la sortie (452) droite.

6. Système (100, 200, 300, 400) d'imagerie selon l'une quelconque des revendications 4 et 5, dans lequel les sorties (451, 452) gauche et droite servent à générer une image stéréoscopique.

7. Système (100, 200, 300, 400) d'imagerie selon une quelconque revendication précédente, dans lequel la première image (210, 410) et la deuxième image (220, 420) sont chacune d'une première perspective (311) ; et la troisième image (230, 430) est d'une deuxième perspective (312).

8. Système d'imagerie selon une quelconque revendication précédente, comprenant en outre

un premier trajet (131, 151) optique s'étendant jusqu'à un premier détecteur (121) pour collecter la lumière pour la première image (210, 410) ; un deuxième trajet (132, 152) optique s'étendant jusqu'à un deuxième détecteur (122) pour collecter la lumière pour la deuxième image (220, 420) ; et
un troisième trajet (133) optique s'étendant jusqu'à un troisième détecteur (123) pour collecter la lumière pour la troisième image (230, 430) ; dans lequel facultativement
les première, deuxième et troisième images présentent un champ de vision (180) partagé.

9. Système (100, 200, 300, 400) d'imagerie selon la revendication 8, dans lequel les premier, deuxième et troisième trajets optiques sont configurés pour transmettre simultanément la lumière aux premier, deuxième et troisième détecteurs (121, 122, 123).

10. Système (100, 200, 300, 400) d'imagerie selon l'une quelconque des revendications 8 et 9, dans lequel les premier et deuxième trajets (131, 151, 132, 153) optiques se chevauchent du champ de vision (180) partagé à un élément (140) optique, et s'étendent ensuite jusqu'aux premier et deuxième détecteurs (121, 122) respectifs.

11. Système (100, 200, 300, 400) d'imagerie selon l'une quelconque des revendications 8 à 10, comprenant en outre :
des optiques (171, 172) de collecte de lumière pour collecter la lumière à partir du champ de vision (180) partagé et diriger la lumière le long des premier, deuxième et troisième trajets (131, 151, 132, 152, 133) optiques jusqu'aux premier, deuxième et troisième détecteurs (121, 122, 123) de sorte que
la première image (210, 410) et la deuxième image (220, 420) soient chacune de la première perspective (311), et la troisième image (220, 420) soit de la deuxième perspective (312).

12. Système (100, 200, 300, 400) d'imagerie selon l'une quelconque des revendications 10 et 11,
dans lequel l'élément (140) optique est configuré pour séparer les première et deuxième trajets (131, 151 ; 132, 152) optiques de sorte qu'au moins l'un des cas suivants s'applique

une bande (151) de longueur d'onde primaire se propage vers le premier détecteur (121) le long du premier trajet (131, 151) optique et une bande (152) de longueur d'onde secondaire se propage le long du deuxième trajet (132, 152) optique jusqu'au deuxième détecteur (122) ; la bande (151) de longueur d'onde primaire se propage le long du premier trajet (131, 151) optique et la bande (151) de longueur d'onde primaire est collectée par le premier détecteur (121) ;
la bande (152) de longueur d'onde secondaire se propage le long du deuxième trajet (132, 152) optique et la bande (152) de longueur d'onde secondaire est collectée par le deuxième détecteur (122) ;

la bande (152) de longueur d'onde secondaire ne se propage pas le long du premier trajet (131, 151) optique ; et
la bande (151) de longueur d'onde primaire ne se propage pas le long du deuxième trajet (132, 152) optique.

**13.** Stéréomicroscope (604) chirurgical comprenant le système (100, 200, 300, 400) d'imagerie selon l'une quelconque des revendications 1 à 12.

**14.** Procédé de détermination d'une image (500), comprenant

la réception (510) d'une première image (210, 410),
la réception (510) d'une deuxième image (220, 420),
la réception (510) d'une troisième image (230, 430),
la détermination (520) d'une carte (250) de disparité à partir de la deuxième image (220, 420) et de la troisième image (230, 430), et
la détermination (530) d'une quatrième image (240, 440) à partir de la première image (210, 410) sur la base de la carte (250) de disparité.

**15.** Programme informatique avec un code de programme pour mettre en œuvre le procédé selon la revendication 14 sur le système (100, 200, 300, 400) d'imagerie selon l'une quelconque des revendications 1 à 12 ou le microscope (604) chirurgical selon la revendication 13.

Fig. 1

Fig. 2

Fig. 3

Fig. 4

500

510

520

530

Fig. 5

600

604

602

Fig. 6

Fig. 7

Fig. 8

**EP 4 006 615 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180024341 A1
- US 20150350632 A1
- US 2016313548 A1
- WO 2012132333 A1
- EP 3009098 A1
- US 10324281 B2
- WO 2014035128 A1